Europäisches Patentamt

**European Patent Office**

Office européen des brevets

(19)

(11) Publication number: **0 053 983**
**A1**

(12) **EUROPEAN PATENT APPLICATION**

(21) Application number: **81401941.0**

(22) Date of filing: **07.12.81**

(51) Int. Cl.³: **F 16 K 5/06**
**E 21 B 34/12**

---

(30) Priority: **09.12.80 US 214473**

(43) Date of publication of application:
**16.06.82 Bulletin 82/24**

(84) Designated Contracting States:
**DE FR GB IT NL**

�
(71) Applicant: **SCHLUMBERGER TECHNOLOGY CORPORATION**
**5000 Gulf Freeway P.O. Box 1472**
**Houston Texas 77001(US)**

(72) Inventor: **Meek, Dale E.**
**2014 Kimberly Road**
**Missouri City Texas(US)**

(74) Representative: **Chareyron, Lucien**
**Schlumberger Limited 42, rue Saint-Dominique**
**F-75340 Paris Cedex 07(FR)**

(54) **Composite ball valve seal assembly.**

㊡ In accordance with an illustrative embodiment of the present invention, a valve seat (13) and seal assembly (30) adapted for use with a ball valve element (14) comprises a retainer ring (25) having a spherical annular seat surface (26), a groove (31) formed in said ring and opening through said seat surface (26), and composite seal means (30) including inner (38) and outer rings (35) positioned in said groove and having outer surfaces (36) engaging said ball valve element (14), one of said rings (35) being made of an elastomer material and the other of said rings (38) being made of a metal, said metal ring (38) being located on the downstream side of said elastomer ring (35).

FIG.1

EP 0 053 983 A1

Croydon Printing Company Ltd.

COMPOSITE BALL VALVE SEAL ASSEMBLY

FIELD OF THE INVENTION

This invention relates generally to valves, and particularly to a new and improved composite seal assembly for a ball valve which may, for example, be incorporated in a well tool such as a full-bore formation tester valve.

BACKGROUND OF THE INVENTION

Various types of well tools such as formation tester valves and safety valves utilize a ball element that coacts with a seat to control fluid flow through a conduit. The ball element rotates about an axis that is transverse to the flow passage between a closed position where an outer peripheral surface thereof engages the seat, and an open position where a bore in the ball element is aligned with the flow passage. In the closed position, a seal may be effected between the ball and the seat by metal-to-metal contact, or by an elastomer seal ring that is mounted on the seat and engages the ball, with the objective of providing a leakproof closure.

Due to its resilient character, an elastomer seal has many advantages such as absorption of surface irregularitites and foreign particles, as well as wear compensation. However, in valve systems that are employed in high pressure and temperature conditions normally encountered in deep oil or gas wells, the maintenance of an effective and operable elastomer seal, particularly where the valve must be opened and closed repeatedly, has been a continuing problem. Under these conditions, a typical elastomer seal will tend to extrude and be blown out of its groove or ruptured, particularly at the high differential pressures which can occur just as the ball valve begins to open. Metal-to-metal seal arrangements also have been used but have several disadvantages. Slight irregularities in matched seating surfaces cannot be accomodated, and solid particles or debris that may be present in formation fluids flowing through the valve can serve to prop metal surfaces open. Moreover, wear is difficult to compensate in metal-to-metal seals. Thus although metal seal components may have superior antiextrusion properties and resistance to being dislodged, such components have not been found to be very satisfactory.

It is a general object of the present invention to provide a new and improved ball valve seal construction.

## SUMMARY OF THE INVENTION

This and other objects are attained, in accordance with one aspect of the invention by a seat and seal assembly adapted for use with a ball valve element that is rotatable between closed and open positions, comprising: a retainer ring having a spherical annular surface on one end engageable with the outer peripheral surface of said ball valve element; a groove formed in said retainer ring and opening through said spherical annular surface; and a composite seal assembly received in said groove, said seal assembly including concentrically arranged elastomer and metallic rings each having an outer surface engageable with said outer peripheral surface of said ball valve element.

## BRIEF DESCRIPTION OF THE DRAWINGS

The present invention has other features and advantages which will become more clearly apparent in connection with the following detailed description of a preferred embodiment taken in conjunction with the appended drawings in which:

Fig. 1 is a view partly in cross section and partly in elevation of a typical ball valve arrangement utilizing the improved seal construction of the present invention; and

Fig. 2 is an enlarged fragmentary cross sectional view of the seal assembly of Fig. 1.

## DESCRIPTION OF A PREFERRED EMBODIMENT

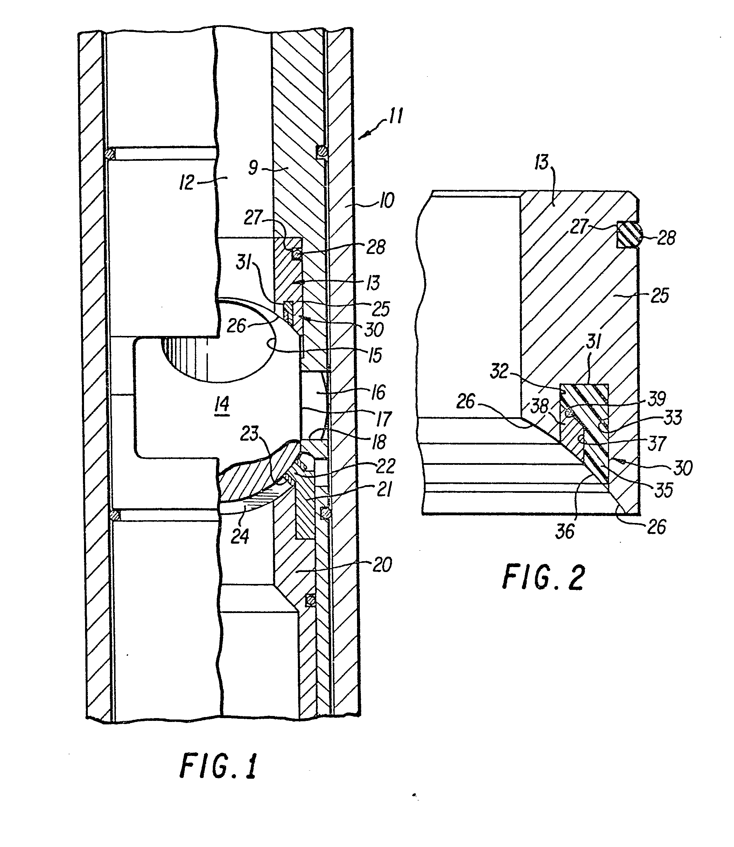

Referring initially to Fig. 1, an apparatus in which the present invention may be embodied includes inner and outer tubular housings 9 and 10 which together constitute a valve body 11 having a flow passage 12 extending longitudinally therethrough. A seat assembly 13 fitted within the body surrounds the flow passage and cooperates with a ball valve element 14. The ball element 14 has a bore 15 therethrough and is mounted for rotation about an axis transverse to the body between a closed position where the bore is disposed at right angles to the flow passage 12 and an open position where the bore of the ball is aligned with te flow passage. The ball element 14 can be mounted for rotation on suitable means such as trunnions 16 that extend for opposite sidewalls 17 of the ball into circular recesses 18 that are formed in the walls of the body 11.

The ball element 14 can be roatated between its open and closed positions by any suitable means such as an actuator sleeve 20 which can rotate about the longitudinal axis of the body and which carries a ring 21 that is appropriatley fixed to is upper end. The ring 21 has an inclined pin 22 that projects inwardly toward the center of the ball element, and the pin can have a roller 23 mounted thereon which engages within a rectangular slot 24 extending circumferentially of the ball in the outer periphery thereof. Thus arranged it will be recognized that the ball element can be rotated to the open position in response to rotation of the sleeve 20 in one direction and to the closed position by rotation of the sleeve 20 in the opposite direction. Of course this particular means for rotating the ball is only one of a number of different structures that might be used, and is described herein for purposes of illustration and not in a limitive sense.

The seat assembly 13 includes a retainer ring 25 that is provided with a spherical annular lower surface 26 which engages the outer periphery of the ball 14. A groove 27 in the outer wall of the retainer ring receives an O-ring seal 28 or the like which sealingly engages the adjacent wall surface of the body 11 to prevent fluid leakage past the retainer ring. The retainer ring may be biased toward the ball element by a spring (not shown) that engages between opposed surfaces on the retainer ring 25 and the body 11.

A composite seal assembly 30 that is constructed in accordance with the principles of the present invention is received in an annular groove 31 formed in the retainer ring 25. As shown in enlarged detail in Fig. 2, the groove 31 has inner and outer walls 32 and 33 that are concentric with the central axis of the retainer ring, the groove being formed so as to open through the spherical surface 26 between the upper and lower edges thereof. The composite seal assembly 30 includes a elastomer ring 35 having a lower surface 36 that is adapted to engage the outer peripherial surface of the ball element 14, and a recess 37 which receives a metallic seal ring 38 made of bronze of the like. The metal ring 38 has a lower surface which is formed to fit tightly against the outer surface of the ball element 14 and an inclined upper surface 39 which fits against the correspondingly shaped wall surface in the recess formed in the elastomer ring 35. The elastomer seal ring 35 is sized such that prior to assembly of the ball and seat, is lower surface and the lower surface of the metal ring 38 extend slightly beyond the wall surface 26 of the retainer ring 25.

## OPERATION

In operation, the parts are assembled as shown in th drawings with the lower surface 26 of the retainer ring 13 and the composite seal assembly 30 engaging the outer surface of the ball element 14. In the case where the ball valve assembly as disclosed herein is to be used, for example in a drill stem testing operation, the ball initially is in the close position as the tools are being run into the well to test depth. The region of the flow passage 12 located above the ball element 14 is at atmospheric or other low pressure with respect to the region below the ball element which normally will contain well fluids at hydrostatic pressure. The relatively high fluid pressure upstream or below the ball valve will energize the elastomer ring 35 which responds very much like a noncompressible liquid filling the groove and transmits such pressure to all enclosing walls, including the metal seal ring 38, to cause it to be pressed tightly against the outer surface of the ball element 14. Thus the metal ring 38 closes any extrusion gap which might otherwise be present, and the metal ring together with the elastomer ring 35 form a fluid tight seal with respect to the ball valve element 14.

As the ball element 14 is rotated to the open position, the edge formed at the intersection of the bore 15 with the outer surface of the ball will pass the elastomer seal ring 35 first, which is prevented from being extruded or being dislodged from the groove 31 by the metal ring 38. Thus it will be appreciated that failure of the elastomer seal 34 is prevented at the particularly high pressure differential which occurs just as the valve beings to open.

It now will be recognized that a new and improved composite ball valve seal construction has been provided which is particularly adapted for high temperature and pressure service. The composite seal provides a structure having the sealing resiliency of an elastomer as well as the extrusion and blowout resistance of a metal seal element, so as to retain sealing ability and allow the valve to be repeatedly opened and closed without damage to the seal under conditions of high temperature and differential pressures. Since certain changes or modifications may be made in the disclosed embodiment with departing form the inventive concepts involved, it is the aim of the appended claims to cover all such changes and modifications falling within the true spirit and scope of the present invention.

CLAIMS:

1. A seat and seal assembly adapted for use with a ball valve element that is rotatable between closed and open positions, characterized by: a retainer ring having a spherical annular surface on one end engageable with the outer peripheral surface of said ball valve element; a groove formed in said retainer ring and opening through said spherical annular surface; and a composite seal assembly received in said groove, said seal assembly including concentrically arranged elastomer and metallic rings each having an outer surface engageable with said outer peripheral surface of said ball valve element.

2. The assembly of claim 1 characterized in that said eleastomer ring has an internal annular recess formed therein, said metallic ring being fitted in said recess.

3. The assembly of claim 2 characterized in that said recess extends in said elastomer ring for less than the full length thereof so that said elastomer ring engages said metallic ring on the side and rear surfaces thereof.

4. The assembly of claim 3 characterized in that said rear surface of said metallic ring is inclined downwardly and inwardly with respect to the axis of said retainer ring.

5. The assembly of any previous claim characterized in that, said metallic ring is located on the downstream side of said elastomer ring.

6. The seal assembly of any one of claims 2-5 characterized in that said metallic ring is lesser in length than said elastomer ring and is received in a recess in said elastomer ring.

7. The seal assembly of any one of claims 2-6 characterized in that said rings are received loosely in said groove so that fluid pressure acting on said elastomer ring can energize it and said metallic ring into tight engagement with said outer surface of said ball valve element, said metallic ring preventing extrusion of said elastomer ring under pressure.

8. The seal assembly of any previous claim characterized in that said metallic ring has the general shape of a parallelogram when viewed in cross section.

0053983

1/1

FIG.1

FIG.2

## EUROPEAN SEARCH REPORT

European Patent Office

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | US - A - 3 901 315 (PARKER) <br> * Column 6, lines 3-43; figures 5,10 * <br><br> -- | 1 | F 16 K 5/06 <br> E 21 B 34/12 |
| A | US - A - 3 494 419 (MULLINS) | | |
| A | FR - A - 2 176 659 (BAKER OIL TOOLS) <br><br> ---- | | |

TECHNICAL FIELDS SEARCHED (Int.Cl. 3)

F 16 K
E 21 B

CATEGORY OF CITED DOCUMENTS

X: particularly relevant if taken alone
Y: particularly relevant if combined with another document of the same category
A: technological background
O: non-written disclosure
P: Intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 09-03-1982 | VAN REETH |